# EUROPÄISCHE PATENTSCHRIFT

(11) **EP 2 547 926 B1**
(45) Veröffentlichungstag und Bekanntmachung des Hinweises auf die Patenterteilung: **21.05.2014**
(21) Anmeldenummer: 11708730.4
(22) Anmeldetag: 10.03.2011
(51) Int. Cl.: F16D 23/14

(54) **AUSRÜCKLAGERANORDNUNG**
RELEASE BEARING ASSEMBLY
ENSEMBLE PALIER DE DÉBRAYAGE

(30) Priorität: 15.03.2010 DE 102010011453
(43) Veröffentlichungstag der Anmeldung: 23.01.2013
(73) Patentinhaber: Schaeffler Technologies GmbH & Co. KG, 91074 Herzogenaurach (DE)
(72) Erfinder: AMARO, Milton, 18070-295 Sorocaba (BR); DOS SANTOS GIORIA, Gustavo, 18081-510 Sorocaba (BR); VISCHI CARVALHO, Rafael, 18030-005 Sorocaba (BR)
(86) Internationale Anmeldenummer: PCT/EP2011/001179
(87) Internationale Veröffentlichungsnummer: WO 2011/113549

(56) Entgegenhaltungen:
- GB-A- 2 045 382
- US-A- 3 105 581
- US-A- 4 226 321

## Beschreibung

Die Erfindung betrifft eine Ausrücklageranordnung für ein Ausrücksystem einer Kupplung eines Kraftfahrzeugs, umfassend ein Gehäuse, an dem in der Montagestellung ein der Betätigung der Ausrücklageranordnung dienendes Steuerorgan angreift, ein im Gehäuse angeordnetes Wälzlager, sowie eine auf einer Führung anzuordnende Innenhülse.

Eine Ausrücklageranordnung der beschriebenen Art stellt das Verbindungsglied zwischen der Kupplung auf der Motorseite und dem Ausrückmechanismus auf der Getriebeseite dar. An der Ausrücklageranordnung greift ein beim Betätigen des Kupplungspedals bewegtes Steuerorgan an, beispielsweise eine Gabel, die die Ausrücklageranordnung zieht, d. h., dass über die Gabel zum Ausrücken der Kupplung in ziehender Weise auf die Ausrücklageranordnung eingewirkt wird. Eine solche Ausrücklageranordnung ist beispielsweise aus DE 33 33 948 A1 bekannt. Sie umfasst ein Gehäuse, das dort in Form einer äußeren Ringhülse ausgeführt ist, die ein Wälzlager übergreift, an das in axialer Richtung gesehen eine auf einer Führung anzuordnende Innenhülse anschließt, die außenseitig ebenfalls von der das Gehäuse bildenden Ringhülse übergriffen ist. An der Ringhülse sind zwei radial vorspringende Arme vorgesehen, an denen die Gabel angreift. Mit der Ausrücklageranordnung ist in der Montagesituation eine Ausrückvorrichtung, die auf die Kupplung einwirkt, gekoppelt, die beim Betätigen des Kupplungspedals und damit Bewegen der Gabel mitsamt der Ausrücklageranordnung gezogen wird, d. h., die Gabel bewegt sich bei ihrer Betätigung letztlich von der gekoppelten Ausrückvorrichtung weg.

In der Montagesituation kann es aufgrund gegebener Toleranzen oder Montageungenauigkeiten zu Fehlausrichtungen zwischen der Gabel, also dem Steuerorgan, und der axial geführten Ausrücklageranordnung kommen, d. h., dass ein Winkelversatz zwischen der Bewegungsrichtung der Gabel und der Bewegungsrichtung der Ausrücklageranordnung gegeben ist. Hieraus resultiert bei bekannten Ausrücklageranordnungen, wie beispielsweise in DE 33 33 948 A1 beschrieben, eine auf die Ausrücklageranordnung einwirkende, zusätzlich zu kompensierende Last, die die Ausrücklageranordnung aufnehmen muss, und die sich nachteilig weil verschleißfördernd auf die Haltbarkeit der Ausrücklageranordnung auswirkt.

Eine gattungsgemäße Ausrücklageranordnung ist aus GB-A-2 045 382 bekannt.

Der Erfindung liegt somit das Problem zugrunde, eine Ausrücklageranordnung anzugeben, die eine verbesserte Standfestigkeit gegenüber einwirkenden Kräften aufweist.

Zur Lösung dieses Problems ist bei einer Ausrücklageranordnung der eingangs genannten Art erfindungsgemäß vorgesehen, dass das Außengehäuseteil am Innengehäuseteil schwenkbar gelagert ist.

Die erfindungsgemäße Ausrücklageranordnung umfasst ein zweiteiliges Gehäuse bestehend aus einem Außengehäuseteil und einem Innengehäuseteil. Am Außengehäuseteil greift das Steuerorgan, also beispielsweise die Kupplungsgabel, an. Das Außengehäuseteil selbst ist schwenkbar mit dem Innengehäuseteil verbunden, es ist relativ zum Innengehäuseteil, das wiederum das Wälzlager aufnimmt, beweglich. Diese Schwenklagerung ermöglicht es nun Kräfte, die aufgrund etwaiger Fehlausrichtungen oder Toleranzen nicht parallel zur Bewegungsrichtung der Ausrücklageranordnung angreifen, sondern schräg dazu, vollständig zu kompensieren. Denn das Außengehäuseteil kann aufgrund seiner Schwenklagerung eine entsprechende lagemäßige Anpassung vornehmen, mithin also letztlich die gegebene geometrische Fehlstellung ausgleichen. Hierüber kommt es zu keinen Dreh- oder Kippmomenten, die sich auf das Ausrücklager und die anderen, im Bereich der Innenhülse befindlichen Bauteile oder die Lagerführung auswirken würden.

Für eine optimale Lastkompensation respektive Fehlstellungsausgleich ist es zweckmäßig, wenn die Schwenkachse senkrecht auf der Verbindungsachse zwischen zwei einander gegenüberliegend am Außengehäuseteil vorgesehenen Betätigungsabschnitten, an denen das Steuerorgan angreift, verläuft. Infolge dieser orthogonalen Anordnung der relevanten Achsen kann das Außengehäuseteil exakt jede Fehlstellung respektive Fehlausrichtung kompensieren und sich entsprechend positionieren.

Zur Schwenklagerung sind zweckmäßigerweise zwei sich vom Außengehäuseteil zum Innengehäuseteil erstreckende Zapfen oder Stifte vorgesehen. Diese können entweder am Außengehäuseteil befestigt sein und in entsprechenden, am Innengehäuseteil angeordneten Hülsen drehbar gelagert sein, alternativ können sie umgekehrt am Innengehäuseteil befestigt und in entsprechenden Hülsen am Außengehäuseteil drehbar gelagert sein. Die Hülsen, die am jeweiligen Gehäuseteil beispielsweise eingepresst oder eingeklebt sein können, dienen der Verbesserung der Verschleißfestigkeit im Dreh- bzw. Bewegungsbereich wie auch der guten Drehlagerung der Zapfen oder Stifte.

Für eine kompakte Bauweise ist es zweckmäßig, wenn das Wälzlager auf der Innenhülse aufsitzt. D. h., dass die Innenhülse das Wälzlager bzw. dessen Innenring durchsetzt. Dies kann entweder in einem Festsitz sein, alternativ kann aber auch zwischen dem Innenring des Wälzlagers und der Innenhülse ein Radialspiel gegeben sein. Dieses Radialspiel ermöglicht es, einen etwaigen axialen Versatz der über die Ausrücklageranordnung gekoppelten Komponenten ausgleichen zu können. D. h., dass hierüber eine Selbstzentrierung oder Selbstausrichtung des Wälzlagers in Bezug auf die tatsächlichen geometrischen Verhältnisse ermöglicht wird. Alternativ zur Ermöglichung einer solchen Selbstzentrierung oder Selbstausrichtung über ein Radialspiel zwischen Innenring und Innenhülse kann diese Ausrichtfunktion auch dadurch erreicht werden, dass zwischen dem Außenring des Wälzlagers und dem Innengehäuseteil ein solches Radialspiel gegeben ist, wobei in diesem Fall dann der Innenring fest auf der Innenhülse aufsitzt. Auch dieses Radialspiel ermöglicht die Selbstzentrierung oder Selbstausrichtung.

Die erfindungsgemäße Ausrücklageranordnung ermöglicht den Ausgleich unterschiedlicher geometrischer Unzulänglichkeiten, nämlich einerseits durch die Schwenklagerung des Außengehäuseteils relativ zum Innengehäuseteil, andererseits durch das Radialspiel im Bereich des Wälzlagers. Es ist also eine doppelte Ausgleichs- oder Anpassmöglichkeit der Ausrücklageranordnung gegeben, die sich besonders vorteilhaft hinsichtlich der Standfestigkeit und Verschleißfestigkeit der Ausrücklageranordnung auswirkt.

In einer konkreten Ausgestaltung der Ausrücklageranordnung ist vorgesehen, dass am Innengehäuseteil ein radial verlaufender Flansch vorgesehen ist, gegen den der an seiner anderen Seite gegen einen Federring abgestützte Außenring des Wälzlagers, gegebenenfalls über ein zwischengeordnetes ringförmiges Federelement, gelagert ist. Das Wälzlager ist also über seinen Außenring zwischen dem einen Axialanschlag bildenden, in einer entsprechenden innengehäuseteilseitigen Nut aufgenommenen Federring und dem Radialflansch des Innengehäuseteils aufgenommen respektive verspannt, wobei hierzu auch ein ringförmiges Federelement, beispielsweise eine Tellerfeder, zusätzlich zwischen Außenring und Flansch angeordnet sein kann. Der Innenring ist an der Innenhülse an einer dort außenseitig ausgebildeten Schulter mit seiner einen Seite axial gelagert, an der anderen Seite ist beispielsweise ebenfalls ein der Abstützung dienender Federring an der Innenhülse vorgesehen. Ist ein Radialspiel zwischen dem Außenring des Wälzlagers und dem Innengehäuseteil gegeben, so ist der Federring und/oder das zwischengeordnete Federelement, sofern ein solches vorgesehen ist, bevorzugt etwas radial beweglich.

Ein Ausführungsbeispiel der Erfindung ist in der Zeichnung dargestellt und wird im Folgenden näher beschrieben. Es zeigen:
Figur 1 eine Perspektivansicht einer erfindungsgemäßen Ausrücklageranordnung mit zugeordnetem Steuerorgan;
Figur 2eine Schnittansicht in Richtung der Linie II - II in Figur 1 zur Darstellung der Schwenklagerung;
Figur 3eine Schnittansicht in Richtung der Linie III - III in Figur 1 zur Darstellung der Bewegungsfunktion;
Figur 4 eine Perspektivansicht einer weiteren erfindungsgemäßen Ausrücklageranordnung;
Figur 5 eine Schnittansicht in Richtung der Linie V - V in Figur 4.

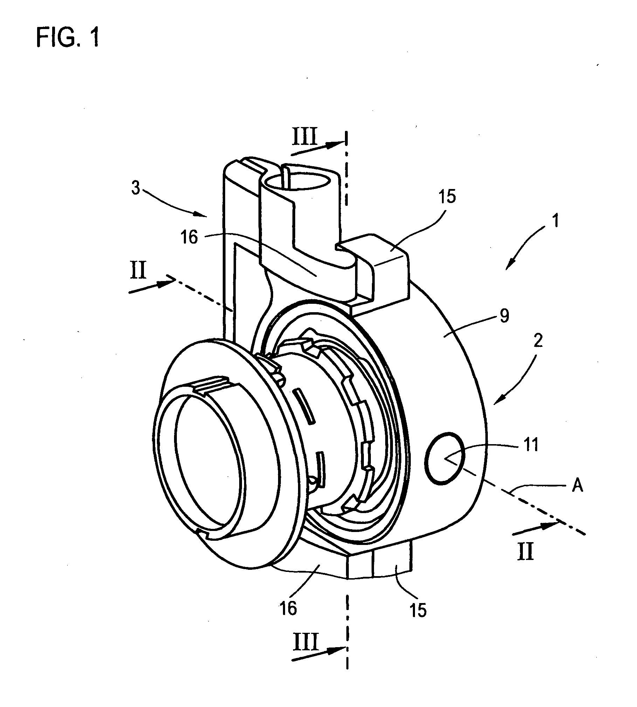

Figur 1 zeigt eine Ausrücklageranordnung 1 einer ersten Ausführungsform, umfassend ein Gehäuse 2, an dem in der Montagestellung ein Steuerorgan 3, hier in Form einer Gabel, zur Betätigung der Ausrücklageranordnung 1 angreift. Im Gehäuse befindet sich ein Wälzlager 4, hier ein Kugellager, das in üblicher Weise einen Außenring 5, einen Innenring 6 sowie dazwischen wälzende Kugeln 7, die in einem Käfig geführt sind, aufweist. Vorgesehen ist ferner eine Innenhülse 8, die der Axiallagerung der Ausrücklageranordnung 1 dient. Auf der Innenhülse sitzt das Wälzlager 4 mit seinem Innenring 6 auf.

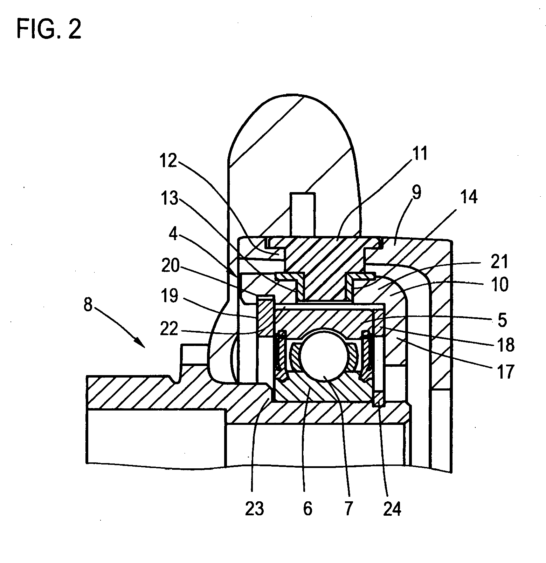

Wie Figur 2 zeigt, besteht das Gehäuse 2 aus einem Außengehäuseteil 9 und einem Innengehäuseteil 10, wobei das Innengehäuseteil 10 axial gesehen vollständig innerhalb des Außengehäuseteils 9 aufgenommen ist. Das Außengehäuseteil 9 ist am Innengehäuseteil 10 schwenkbar gelagert. Hierzu sind zwei einander gegenüberliegende Zapfen 11 vorgesehen, die das Außengehäuseteil in einer im gezeigten Beispiel gestuften Durchbrechung 12 durchsetzen. Am Innengehäuseteil 10 ist eine Durchbrechung 13 vorgesehen, in der im gezeigten Ausführungsbeispiel eine gekröpfte Hülse 14 angeordnet ist, die verschleißhemmend wirkt. In die Hülse 14 greift der Zapfen 11 ein, er ist in ihr drehgelagert. Die beiden Zapfen 11 bilden eine Drehachse A, um die das Außengehäuseteil 9 relativ zum Innengehäuseteil 10 geschwenkt werden kann. Diese Drehachse A, mithin also die Zapfen 11, sind um 90° versetzt zu am Außengehäuseteil 9 außenseitig vorspringenden Betätigungsabschnitten 15, an denen das Steuerorgan 3, hier also die Gabel, mit entsprechenden Angriffsabschnitten 16 angreift.

Kommt es nun aufgrund der Einbausituation zu einer Fehlausrichtung oder einem Versatz der Betätigungsachse, also der Bewegungsrichtung des Steuerorgans 3 relativ zur Führungsrichtung der Innenhülse auf ihrer Axialführung, so verschwenkt das Außengehäuseteil um die Schwenkachse A und kompensiert hierdurch diese Fehlstellung. Die Kraft, die die Gabel auf das Außengehäuseteil 9 ausübt, wird über die Zapfen 11 unmittelbar auf das Innengehäuseteil 10 übertragen, das die Kraft wiederum auf das im Innengehäuseteil befindliche Wälzlager und über dieses auf die Innenhülse 8 überträgt.

Neben der über die Schwenklagerung des Außengehäuseteils 9 am Innengehäuseteil 10 ermöglichten Kompensation einer winkligen Fehlausrichtung ist bei der erfindungsgemäßen Ausrücklageranordnung 1 auch eine Kompensation etwaiger axialer Ausrichtungsfehler der über die Ausrücklageranordnung 1 gekoppelten Bauteile gegeben. Diese Ausgleichsmöglichkeit wird durch die mit geringem Radialspiel realisierte Lagerung des Wälzlagers 4 im Innengehäuseteil 10 realisiert. Das Innengehäuseteil 10 weist einen radial nach innen gerichteten Flansch 17 auf. Dieser Flansch 17 dient als Gegenlager für den Außenring 5. Dieser ist am Flansch 17 über ein zwischengeschaltetes Federelement 18, hier eine Tellerfeder, aufgelagert. An der gegenüberliegenden Seite stützt sich der Außenring 15 an einem Federring 19 ab, der in einer Nut 20 am axial verlaufenden, zylindrischen Abschnitt des Innengehäuseteils 10 eingeschnappt ist. Der Innenring 6 ist an einer Schulter 23 der Innenhülse 8 einerseits und einem an der Innenhülse 8 eingeschnappten Federring 24 andererseits lagefest und spielfrei an der Innenhülse 8 fixiert. Der Innendurchmesser des zylindrischen Abschnitts 21 des Innengehäuseteils 10 und der Außendurchmesser des Außenrings 5 des Wälzlagers 4 sind unterschiedlich, so dass sich ein geringes Radialspiel ergibt, wie anhand des Spaltes 22 zwischen Außenring und Innengehäuseteils 10 gezeigt. Dieses Radialspiel ermöglicht eine Radialbewegung der Innenhülse 8 samt Wälzlager 4 relativ zum Innengehäuseteil 10 und damit dem gesamten Gehäuse 2. Im Falle einer erforderlichen radialen Ausgleichsbewegung kann das Federelement 18 und gegebenenfalls auch der Federring 19, dessen ihn aufnehmende Nut hinreichend tief ausgeführt ist, sich radial bewegen, so dass der Außenring 5 stets abgestützt ist. Natürlich kann über dieses Radialspiel auch ein etwaiger Parallelversatz der Richtung oder Achse der Krafteinleitung über die Gabel relativ zur Führungsachse ausgeglichen werden, d. h., dass im Falle eines solchen Versatzes eine entsprechende Selbstzentrierung respektive Ausrichtung durch eine Radialverschiebung zwischen Gehäuse 2 und Wälzlager 4 nebst Innenhülse 8 erfolgt.

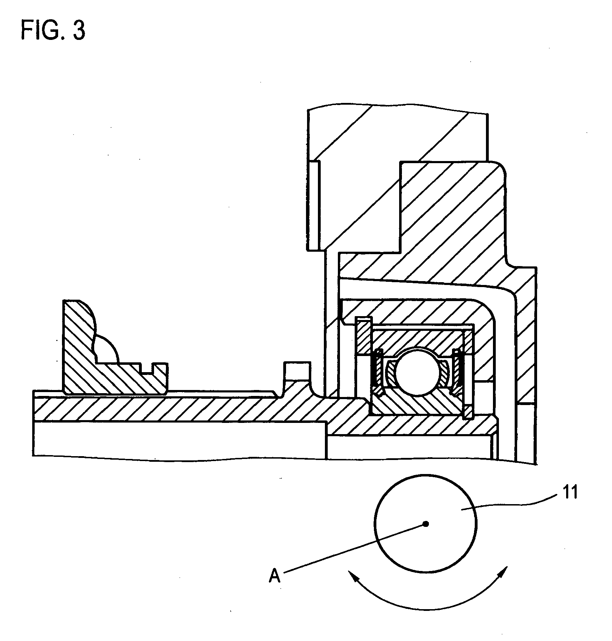

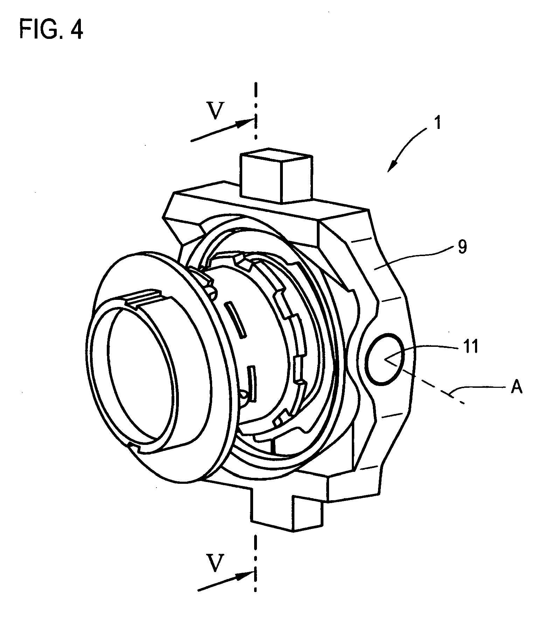

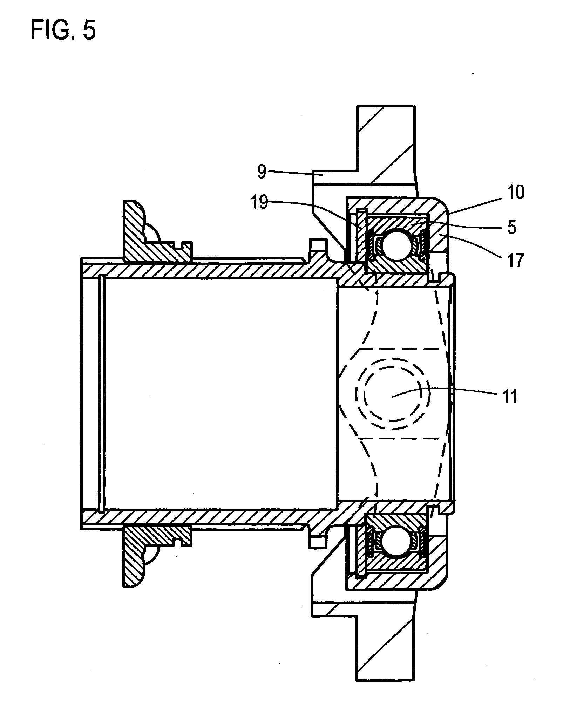

Eine weitere Ausführungsalternative einer erfindungsgemäßen Ausrücklageranordnung 1 ist in den Figuren 4 und 5 gezeigt. Der Grundaufbau entspricht insoweit der Ausrücklageranordnung 1 der Fig. 1 - 3. Das Außengehäuseteil 9 jedoch ist etwas anders in seiner äußeren Form respektive Geometrie ausgeführt, verglichen mit dem Außengehäuseteil der zuvor beschriebenen Ausführungsform. Es umfasst das Innengehäuseteil 10 nicht vollständig. Gleichwohl ist es über Zapfen 11 am Innengehäuseteil 10 in gleicher Weise schwenkgelagert. Ein weiterer Unterschied besteht darin, dass bei dieser Ausführungsform der Außenring 5 des Wälzlagers 4 unmittelbar an dem radial gerichteten Flansch 17 des Innenringgehäuseteils anliegt, dass hier also kein Federelement zwischengeschaltet ist. Gegenüberliegend ist er wiederum über einen in einer Nut eingeschnappten Federring 19 abgestützt, wobei die Nut eine hinreichende Tiefe besitzt, dass eine gewissen Beweglichkeit des Federrings 19 in radialer Richtung gegeben ist, um im Falle einer Fehlausrichtung das auch hier gegebene Radialspiel zwischen Außenring 5 und Innengehäuseteil 10 nutzen zu können.

### Bezugszahlenliste

- 1: Ausrücklageranordnung
- 2: Gehäuse
- 3: Steuerorgan
- 4: Wälzlager
- 5: Außenring
- 6: Innenriung
- 7: Kugel
- 8: Innenhülse
- 9: Außengehäuseteil
- 10: Innengehäuseteil
- 11: Zapfen
- 12: Durchbrechung
- 13: Durchbrechung
- 14: Hülse
- 15: Betätigungsabschnitt
- 16: Angriffsabschnitt
- 17: Flansch
- 18: Federelement
- 19: Federring
- 20: Nut
- 21: Abschnitt
- 22: Spalt
- 23: Schulter
- 24: Federring

## Patentansprüche

1. Ausrücklageranordnung für ein Ausrücksystem einer Kupplung eines Kraftfahrzeugs, umfassend ein Gehäuse (2), an dem in der Montagestellung ein der Betätigung der Ausrücklageranordnung dienendes Steuerorgan (3) angreift, ein im Gehäuse (2) angeordnetes Wälzlager (4), sowie eine auf einer Führung anzuordnende Innenhülse, wobei das Gehäuse (2) ein mit dem Steuerorgan (3) zusammenwirkendes Außengehäuseteil (9) und ein das Wälzlager (4) aufnehmendes Innengehäuseteil (10) aufweist, **dadurch gekennzeichnet, dass** das Außengehäuseteil (9) am Innengehäuseteil (10) schwenkbar gelagert ist.

2. Ausrücklageranordnung nach Anspruch 1, **dadurch gekennzeichnet, dass** die Schwenkachse (A) senkrecht auf der Verbindungsachse zwischen zwei einander gegenüberliegend am Außengehäuseteil (10) vorgesehenen Betätigungsabschnitten (15), an denen das Steuerorgan (3) angreift, verläuft.

3. Ausrücklageranordnung nach Anspruch 1 oder 2, **dadurch gekennzeichnet, dass** zur Schwenklagerung zwei sich vom Außengehäuseteil (9) zum Innengehäuseteil (10) erstreckende Zapfen (11) oder Stifte vorgesehen sind.

4. Ausrücklageranordnung nach Anspruch 3, **dadurch gekennzeichnet, dass** die am Außengehäuseteil (9) oder am Innengehäuseteil (10) befestigten Zapfen (11) oder Stifte in am jeweils anderen Gehäuseteil angeordneten Hülsen (14) drehbar gelagert sind.

5. Ausrücklageranordnung nach einem der vorangehenden Ansprüche, **dadurch gekennzeichnet, dass** das Wälzlager (4) auf der Innenhülse (8) sitzt.

6. Ausrücklageranordnung nach einem der vorangehenden Ansprüche, **dadurch gekennzeichnet, dass** zwischen dem Außenring (5) des Wälzlagers (4) und dem Innengehäuseteil (10), oder zwischen dem Innenring (6) des Wälzlagers (4) und der Innenhülse (8) ein Radialspiel (22) gegeben ist.

7. Ausrücklageranordnung nach einem der vorangehenden Ansprüche, **dadurch gekennzeichnet, dass** am Innengehäuseteil (10) ein radial verlaufender Flansch (17) vorgesehen ist, gegen den der an seiner anderen Seite gegen einen Federring (19) abgestützte Außenring (5) des Wälzlagers (4), gegebenenfalls über ein zwischengeordnetes ringförmiges Federelement (18), gelagert ist.

8. Ausrücklageranordnung nach Anspruch 6 und 7, **dadurch gekennzeichnet, dass** bei gegebenem Radialspiel (22) zwischen dem Außenring (5) des Wälzlagers (4) und dem Innengehäuseteil (10) der Federring (19) und/oder das zwischengeordnete Federelement (18) radial beweglich sind.

## Claims

1. Release bearing arrangement for a release system of a clutch of a motor vehicle, comprising a housing (2), on which a control member (3) which serves to actuate the release bearing arrangement acts in the assembled position, an anti-friction bearing (4) which is arranged in the housing (2), and an inner sleeve which is to be arranged on a guide, the housing (2) having an outer housing part (9) which interacts with the control member (3) and an inner housing part (10) which receives the anti-friction bearing (4), **characterized in that** the outer housing part (9) is mounted pivotably on the inner housing part (10).

2. Release bearing arrangement according to Claim 1, **characterized in that** the pivot axis (A) runs perpendicularly on the connecting axis between two actuating sections (15) which are provided on the outer housing part (9) so as to lie opposite one another and on which the control member (3) acts.

3. Release bearing arrangement according to Claim 1 or 2, **characterized in that** two journals (11) or pins which extend from the outer housing part (9) to the inner housing part (10) are provided for pivotable mounting.

4. Release bearing arrangement according to Claim 3, **characterized in that** the journals (11) or pins which are fastened to the outer housing part (9) or to the inner housing part (10) are mounted rotatably in sleeves (14) which are arranged on the respectively other housing part.

5. Release bearing arrangement according to one of the preceding claims, **characterized in that** the anti-friction bearing (4) is seated on the inner sleeve (8).

6. Release bearing arrangement according to one of the preceding claims, **characterized in that** there is a radial play (22) between the outer ring (5) of the anti-friction bearing (4) and the inner housing part (10) or between the inner ring (6) of the anti-friction bearing (4) and the inner sleeve (8).

7. Release bearing arrangement according to one of the preceding claims, **characterized in that** a radially running flange (17) is provided on the inner housing part (10), against which flange (17) the outer ring (5) of the anti-friction bearing (4), which outer ring (5) is supported on its other side against a spring ring (19), is mounted, optionally via an annular spring element (18) which is arranged in between.

8. Release bearing arrangement according to Claim 6 or 7, **characterized in that**, in the case of an existing radial play (22) between the outer ring (5) of the anti-friction bearing (4) and the inner housing part (10), the spring ring (19) and/or the spring element (18) which is arranged in between can be moved radially.

## Revendications

1. Ensemble palier de débrayage pour un système de débrayage d'un embrayage de véhicule automobile, comportant un boîtier (2) sur lequel agit dans la position de montage un organe de commande (3) servant à l'actionnement de l'ensemble palier de débrayage, un palier à roulement (4) disposé dans le boîtier (2) ainsi qu'une douille intérieure devant être disposée sur un guide, le boîtier (2) comprenant une partie extérieure de boîtier (9) coopérant avec l'organe de commande (3) et une partie intérieure de boîtier (10) recevant le palier à roulement (4), **caractérisé en ce que** la partie extérieure de boîtier (9) est montée de manière pivotante sur la partie intérieure de boîtier (10).

2. Ensemble palier de débrayage selon la revendication 1, **caractérisé en ce que** l'axe de pivotement (A) s'étend perpendiculairement à l'axe de liaison entre deux portions d'actionnement (15) prévues en regard l'une de l'autre sur la partie extérieure de boîtier (9), sur lesquelles portions d'actionnement agit l'organe de commande (3).

3. Ensemble palier de débrayage selon la revendication 1 ou 2, **caractérisé en ce que** deux tourillons (11) ou goupilles s'étendant à partir de la partie extérieure de boîtier (9) jusqu'à la partie intérieure de boîtier (10) sont prévu(e)s pour le montage pivotant.

4. Ensemble palier de débrayage selon la revendication 3, **caractérisé en ce que** les tourillons (11) ou goupilles fixé(e)s à la partie extérieure de boîtier (9) ou à la partie intérieure de boîtier (10) sont monté(e)s à rotation dans des douilles (14) disposées respectivement sur l'autre partie de boîtier.

5. Ensemble palier de débrayage selon l'une quelconque des revendications précédentes, **caractérisé en ce que** le palier à roulement (4) repose sur la douille intérieure (8).

6. Ensemble palier de débrayage selon l'une quelconque des revendications précédentes, **caractérisé en ce qu'**il existe un jeu radial (22) entre la bague extérieure (5) du palier à roulement (4) et la partie intérieure de boîtier (10), ou entre la bague intérieure (6) du palier à roulement (4) et la douille intérieure (8).

7. Ensemble palier de débrayage selon l'une quelconque des revendications précédentes, **caractérisé en ce qu'**un rebord (17) s'étendant radialement est prévu sur la partie intérieure de boîtier (10), contre lequel rebord est montée, éventuellement par le biais d'un élément ressort (18) annulaire intercalé, la bague extérieure (5) du palier à roulement (4), laquelle bague extérieure est supportée de son autre côté par une bague élastique (19).

8. Ensemble palier de débrayage selon les revendications 6 et 7, **caractérisé en ce que**, lorsqu'il existe un jeu radial (22) entre la bague extérieure (5) du palier à roulement (4) et la partie intérieure de boîtier (10), la bague élastique (19) et/ou l'élément ressort (18) intercalé peu(ven)t être déplacé(e)(s) radialement.
